# EUROPÄISCHE PATENTANMELDUNG

(11) **EP 0 728 432 A1**
(43) Veröffentlichungstag der Anmeldung: **28.08.1996**
(21) Anmeldenummer: 95115915.1
(22) Anmeldetag: 10.10.1995
(51) Int. Cl.: A47G 25/28, B29C 45/44

(54) **Kleiderbügel und Verfahren zu seiner Herstellung**

(30) Priorität: 25.02.1995 DE 19506645
(71) Anmelder: Coronet-Kunststoffwerk GmbH, D-64689 Grasellenbach (DE)
(72) Erfinder: Weihrauch, Georg, D-69483 Waldmichelbach-Affolterbach (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Ein Kleiderbügel (10) weist einen Bügelkörper (11), der ein nach unten offenes U-Profil besitzt, und einen im Mittelbereich des Bügelkörpers angebrachten Aufhängehaken (14) auf. Um Druckstellen an Kleidungsstücken (16) zuverlässig zu vermeiden, sind die freien Enden (15) der Schenkel (12,13) des U-Profils zur Profilmittelachse nach innen gezogen bzw. versetzt, so daß der Bügelkörper einen etwa hufeisenförmigen Querschnitt aufweist. Die Schenkel (12,13) des U-Profils besitzen dabei vorzugsweise eine im wesentlichen konstante Dicke. Bei der Herstellung eines entsprechenden Kleiderbügels werden die Formhälften nach begonnener Aushärtung des Kunststoff-Materials derart voneinander getrennt, daß der Bügelkörper in einer Formhälfte verbleibt. Anschließend wird der den Formhohlraum innenseitig begrenzende Kern oder Schieber unter elastischer Verformung zumindest eines Schenkels des Bügelkörpers mit diesem außer Eingriff gebracht, wobei der oder die verformten Schenkel wieder in ihre nach innen gezogene Ausgangslage zurückkehren.

## Beschreibung

Die Erfindung betrifft einen Kleiderbügel mit einem Bügelkörper, der ein nach unten offenes U-Profil besitzt, und einem im Mittelbereich des Bügelkörpers angebrachten Aufhängehaken. Darüber hinaus betrifft die Erfindung ein Verfahren zur Herstellung eines derartigen Kleiderbügels.

Kleiderbügel mit einem nach unten offen U-Profil sind in vielen Ausgestaltungen bekannt. Dabei ist der Übergang zwischen den Schenkeln und dem die Schenkel verbindenden Rücken meistens abgerundet, um Druckstellen an Kleidungsstücken aus empfindlichen Stoffen zu vermeiden. Die Schenkel bei bekannten U-Profilbügeln sind parallel zueinander angeordnet, was insbesondere herstellungsbedingt ist, da der den Innenraum des U-Profils während des Spritzvorgangs ausfüllende Schieber oder Kern zwischen den Schenkeln herausgezogen werden muß, wodurch die Ausbildung von Hinterschneidungen nicht möglich ist.

Es hat sich gezeigt, daß bei Kleiderbügeln mit einem U-förmigen Bügelkörper mit parallelen Schenkeln am unteren freien Ende der Schenkel relativ scharfe Kanten entstehen, die insbesondere bei empfindlichen Stoffen zu Druckstellen führen können, wodurch das Kleidungsstück abgewertet oder gar unbrauchbar wird.

Es ist zwar bekannt, den Schieber in Längsrichtung des Bügelkörpers seitlich herauszuziehen, dies bringt jedoch sehr lange Schieberweg mit sich und ist deshalb unwirtschaftlich. Darüber hinaus ist ein derartiges seitliches Herausziehen des Schiebers nur bei geraden Bügelkörpern anwendbar, die über ihre gesamte Länge einen konstanten Querschnitt besitzen. Insbesondere bei Kleiderbügeln für Jacken und Jacketts, deren Bügelkörper in sich gewölbt ist, ist ein seitliches Herausziehen nicht möglich, so daß der Schieber zwischen den Schenkeln nach unten herausgezogen bzw. der Bügelkörper vom Kern entsprechend abgehoben werden muß.

Es ist weiter bekannt, auf der Außenseite des Bügelkörpers im Übergangsbereich der Schenkel mit dem Rücken zusätzliches Kunststoff-Material anzuordnen. Dabei ergibt sich jedoch der Nachteil, daß aufgrund der abschnittsweise erhöhten Wandstärke längere Abkühl- und somit Produktionszeiten für jeden Bügelkörper verbunden sind, wodurch die Produktivität insgesamt nachteilig beeinflußt ist.

Der Erfindung liegt die Aufgabe zugrunde, einen Kleiderbügel der genannten Art zu schaffen, bei dem Druckstellen an Kleidungsstücken zuverlässig vermieden sind, sowie ein Verfahren zur Herstellung eines derartigen Kleiderbügels vorzusehen, mit dem dieser in wirtschaftlicher Weise herstellbar ist.

Diese Aufgabe wird hinsichtlich des Kleiderbügels dadurch gelöst, daß die freien Enden der Schenkel des U-Profils gegenüber der größten Profilbreite zur Profilmittelachse, d.h. zur vertikalen Symmetrieachse des Bügelkörpers nach innen gezogen sind. Auf diese Weise ist zwischen einem auf dem Bügelkörper angeordenten Kleidungsstück, das senkrecht nach unten hängt, ein Abstand zu den nach innen gezogenen Kanten am freien Ende der Schenkel gebildet, so daß Druckstellen selbst dann nicht entstehen können, wenn eine Vielzahl von Kleiderbügeln nebeneinander auf einer Stange hängen und seitlich zusammengeschoben werden, wie es beispielsweise bei dem Kleidertransport häufig vorkommt. Dabei ist der Materialeinsatz minimiert, wenn die Schenkel eine im wesentlichen konstante Dicke bzw. Stärke besitzen und somit der nach innen gerichtete Versatz der freien Enden der Schenkel allein durch die Formgebung des Profils erreicht wird.

Der nach innen gerichtete Versatz der freien Ende der Schenkel kann auf verschiedene Weise erreicht werden. Insbesondere ist es möglich, daß die Schenkel zumindest abschnittsweise oder vollständig im wesentlichen kontinuierlich gekrümmt sind, es ist jedoch auch möglich, die Schenkel zumindest abschnittsweise im wesentlichen geradlinig auszubilden. Die Schenkel bei dem erfindungsgemäßen Kleiderbügel laufen somit nicht parallel, sondern ihr gegenseitiger Abstand verringert sich zu ihrem freien Ende hin.

Um die Druckstellen zu vermeiden, dürfen auch im Anschlußbereich zwischen den Schenkeln und dem die Schenkel verbindenden Rücken keine Kanten vorhanden sein. Der auf der Außenseite des U-Profils kantenfreie Bügelkörper kann beispielsweise dadurch erreicht werden, daß dieser einen hufeisenförmigen Querschnitt besitzt, d.h. im wesentlichen kontinuierlich gekrümmt ist und nach innen gezogene freie Enden aufweist.

Darüber hinaus ist bei einem hufeisenförmigen Querschnitt verglichen mit einem U-Profil mit parallelen Schenkeln eine größere räumliche Stabilität gegeben, wodurch es möglich ist, die Wandstärken unter Beibehaltung der Stabilität zu verringern.

Hinsichtlich des Verfahrens wird die oben genannte Aufgabe folgendermaßen gelöst: Zunächst wird ein dem Bügelkörper entsprechender Formhohlraum, der außenseitig von zwei Formhälften und innenseitig von zumindest einem Kern begrenzt ist, mit einem Kunststoff-Material aufgefüllt. Nachdem das Kunststoff-Material des Bügelkörpers zumindest mit der Aushärtung begonnen hat und eine ausreichende Eigenstabilität aufweist, werden die Formhälften voneinander getrennt bzw. auseinandergefahren. Der Bügelkörper verbleibt in einer Formhälfte zusammen mit dem Kern. Nach dem Trennen der Formhälften wird der Kern unter elastischer Verformung zumindest eines Schenkels des Bügelkörpers von diesem getrennt. Da die Schenkel von den Formhälften nicht mehr vollständig gelagert sind und noch eine hohe Elastizität aufweisen, können sie dem Kern ausweichen. Nachdem der Bügelkörper vom Kern freigekommen ist, federn die Schenkel des Bügelkörpers in ihre ursprüngliche Lage zurück. Auf diese Weise kann aufgrund der elastischen Verformung der Schenkel des Bügelkörpers das Entformen eines hufeisenförmigen U-Profils, d.h. einer Hinterschneidung im Innenbereich des U-Profils in einfacher Weise erreicht werden. Die Erzielung der Hufeisenform kann über einen gesteuerten Schrumpfungsprozeß des Kunststoff-Materials unterstützt werden.

Zunächst soll ein Verfahren betrachtet werden, bei dem der Bügelkörper liegend gespritzt wird, wobei jede Formhälfte jeweils einen Schenkel des Bügelkörpers außenseitig begrenzt. Bei einem derartigen Verfahren ist es vorteilhaft, wenn der Kern von einem Schieber gebildet ist, der nach dem Trennen der Formhälften aus dem Bügelkörper zur offenen Seite des U-Profils zwischen den Schenkeln herausgezogen wird. Dies ermöglicht es, daß nach dem Trennen der Formhälften der eine Schenkel des Bügelkörpers zwischen der ihn tragenden Formhälfte und dem Schieber gehalten ist, während der andere Schenkel freiliegt. Dabei wird beim Herausziehen des Schiebers im wesentlichen oder allein der freiliegende Schenkel elastisch verformt, während der andere Schenkel in der Formhälfte vollflächig anliegt.

Um die Belastungen des in der Formhälfte anliegenden Schenkels beim Herausziehen des Schiebers möglichst gering zu halten oder zu vermeiden, sollte in Weiterbildung der Erfindung vorgesehen sein, daß der nach dem Trennen der Formhälfte zwischen der einen Formhälfte und dem Schieber gehaltene Schenkel sich im wesentlichen in Ziehrichtung des Schiebers erstreckt. Der Schenkel verläuft somit im wesentlichen parallel zur Ziehrichtung, so daß er durch den Schieber beim Ziehen nicht seitlich beaufschlagt wird.

In vorteilhafter Ausgestaltung der Erfindung ist vorgesehen, daß der nach dem Trennen der Formhälften zwischen der einen Formhälfte und dem Schieber gehaltene Schenkel sich im wesentlichen senkrecht zur Trennrichtung der Formhälften erstreckt. Dies führt dazu, daß die Profilmittelachse bzw. die vertikale Symmetrieachse des U-Profils des Bügelkörpers geneigt zur Trennrichtung der Formhälften verläuft. Gleichzeitig verläuft die Profilmittelachse des U-Profils auch geneigt zur Ziehrichtung des Schiebers, wodurch insgesamt ein einfaches Entformen des Bügelkörpers möglich ist.

Gemäß einer weiteren Ausgestaltung des erfindungsgemäßen Verfahrens wird der Bügelkörper im wesentlichen stehend gespritzt, wobei eine obere Formhälfte jeweils einen oberen Abschnitt der Schenkel des Bügelkörpers und den diese verbindenen Rücken außenseitig begrenzt. Eine untere Formhälfte begrenzt jeweils einen unteren Abschnitt der Schenkel außenseitig. Der den Formhohlraum innenseitig begrenzende Kern ist in bevorzugter Ausgestaltung fest mit der unteren Formhälfte verbunden oder ein einstückiger Bestandteil von dieser. Nachdem das Kunststoffmaterial ausreichend verfestigt ist, wird die obere Formhälfte abgehoben, was insbesondere erleichtert ist, wenn die Trennebene der Formhälften im Bereich der größten Breite des Bügelkörpers liegt.

Nach dem Trennen der Formhälften sind die beiden Schenkel des Bügelkörpers in ihrem unteren, dem freien Ende benachbarten Bereich zwischen der unteren Formhälfte und dem Kern gehalten. Um den Bügelkörper aus dieser Halterung unter elastischer Verformung beider Schenkel zu lösen, kann in bevorzugter Ausgestaltung der Erfindung im Kern ein Ausstoßer angeordnet sein, mit dem der Bügelkörper nach Abheben der oberen Formhälfte vom Kern vorzugsweise nach oben heruntergeschoben wird.

Weitere Einzelheiten und Merkmale der Erfindung sind aus der folgenden Beschreibung eines Ausführungsbeispiels unter Bezugnahme auf die Zeichnung ersichtlich. Es zeigen
- Fig. 1: einen Querschnitt durch einen erfindungsgemäßen Kleiderbügel mit einem aufgehängten Kleidungsstück,
- Fig. 2: die Formwerkzeuge gemäß einem 1. Verfahren beim Einspritzen des Kunststoff-Materials,
- Fig. 3: die Formwerkzeuge gemäß dem 1. Verfahren nach dem Trennen der Formhälften,
- Fig. 4: die Formwerkzeuge gemäß dem 1. Verfahren beim Herausziehen des Schiebers,
- Fig. 5: die Formwerkzeuge gemäß dem 1. Verfahren bei Entnahme des fertigen Bügelkörpers,
- Fig. 6: die Formwerkzeuge gemäß einem 2. Verfahren nach dem Einspritzen des Kunststoff-Materials,
- Fig. 7: die Formwerkzeuge gemäß dem 2. Verfahren nach dem Trennen der Formhälften,
- Fig. 8: die Formwerkzeuge gemäß dem 2. Verfahren beim Ausstoßen des Bügelkörpers und
- Fig. 9: die Formwerkzeuge gemäß dem 2. Verfahren mit entnommenem, fertigem Bügelkörper.

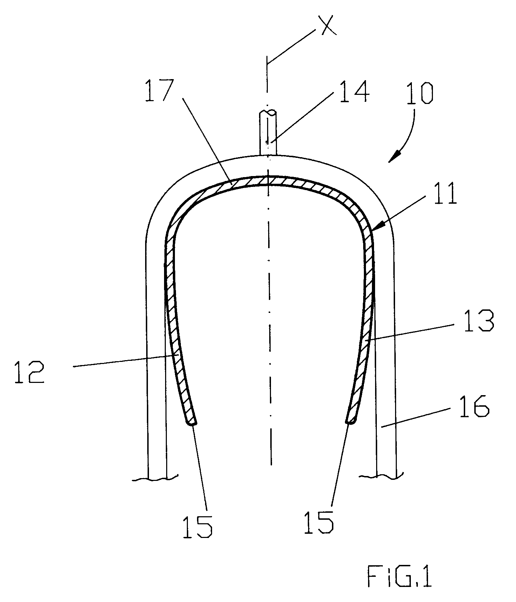

Fig. 1 zeigt einen Querschnitt eines Kleiderbügels 10 mit einem aus Kunststoff bestehenden, nach unten offenen U-förmigen Bügelkörper 11, auf dessen Oberseite ein nicht näher dargestellter Aufhängehaken 14 angebracht ist. Der Bügelkörper 11 ist zu einer vertikalen Profilmittelachse X symmetrisch ausgebildet und weist zwei Schenkel 12 und 13 auf, die an ihrem oberen Ende über einen Rücken 17 miteinander verbunden sind. Sowohl die Schenkel 12 und 13 als auch der Rücken 17 sind außenseitig konvex gekrümmt, wodurch eine kantenfreie Außenseite des Bügelkörpers 11 erreicht ist. Die freien Enden 15 der Schenkel 12 und 13 sind gegenüber der größten Profilbreite zur Profilmittelachse X nach innen gezogen bzw. versetzt, so daß ein insgesamt hufeisenförmiger Querschnitt erreicht ist.

Ein auf den Bügel aufgebügeltes Kleidungsstück 16 hängt im wesentlichen vertikal nach unten, wobei durch den nach innen gerichteten Versatz der freien Enden 15 des Bügelkörpers 11 ein Abstand der freien Enden 15 zu dem Kleidungsstück 16 erreicht ist.

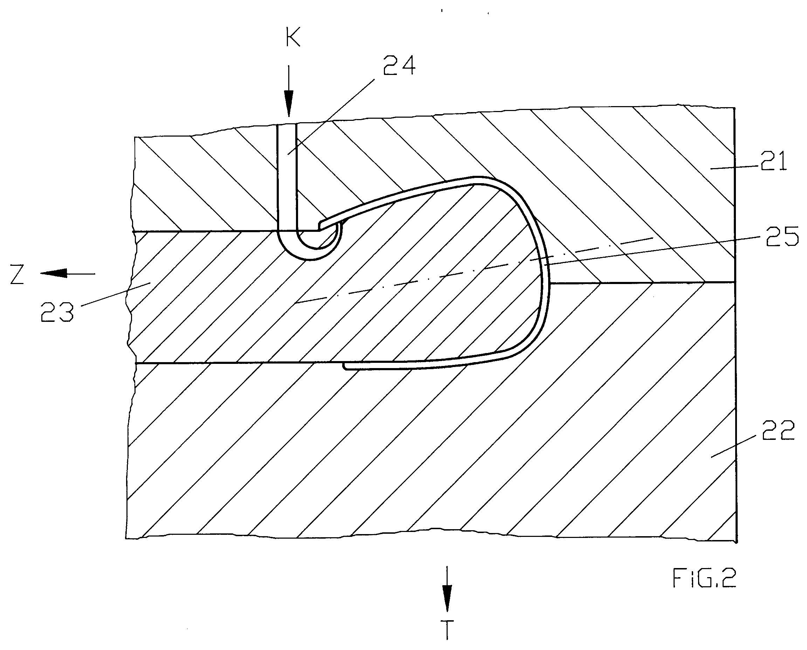

Im folgenden wird ein 1. Verfahren zur Herstellung eines entsprechenden Kleiderbügels anhand der Figuren 2 bis 5 im einzelnen erläutert.

Gemäß der Fig. 2 sind eine obere Formhälfte 21 und eine untere Formhälfte 22 vorgesehen, die einen dem Profil eines liegenden Bügelkörpers entsprechenden Formhohlraum 25 außenseitig begrenzen. Die beiden Formhälften 21 und 22 sind aufeinander zu und in Richtung des Pfeils T voneinander weg bewegbar. Zwischen den Formhälften 21 und 22 ist ein Schieber 23 angeordnet, der den Formhohlraum 25 innenseitig begrenzt und im wesentlichen senkrecht zur Richtung T zwischen die Formhälften 21 und 22 einfahrbar sowie in Richtung des Pfeils Z aus diesen herausziehbar ist. Der Formhohlraum 25 steht über einen Zuführkanal 24 mit einer nicht näher dargestellten Zuführleitung in Verbindung, über die dem Formhohlraum 25 eine Kunststoffmasse eingespritzt werden kann, wie durch den Pfeil K angedeutet ist.

Wie Fig. 2 zeigt, besitzt der Formhohlraum einen im wesentlichen hufeisenförmigen Querschnitt, wobei der Abstand der freien Enden der Schenkel geringer als ihr Abstand im Mittelbereich ist. Auf diese Weise ist eine Hinterschneidung gebildet, die ein Herausziehen des Schiebers 23 bei geschlossenen Formhälften 21 und 22 unmöglich macht.

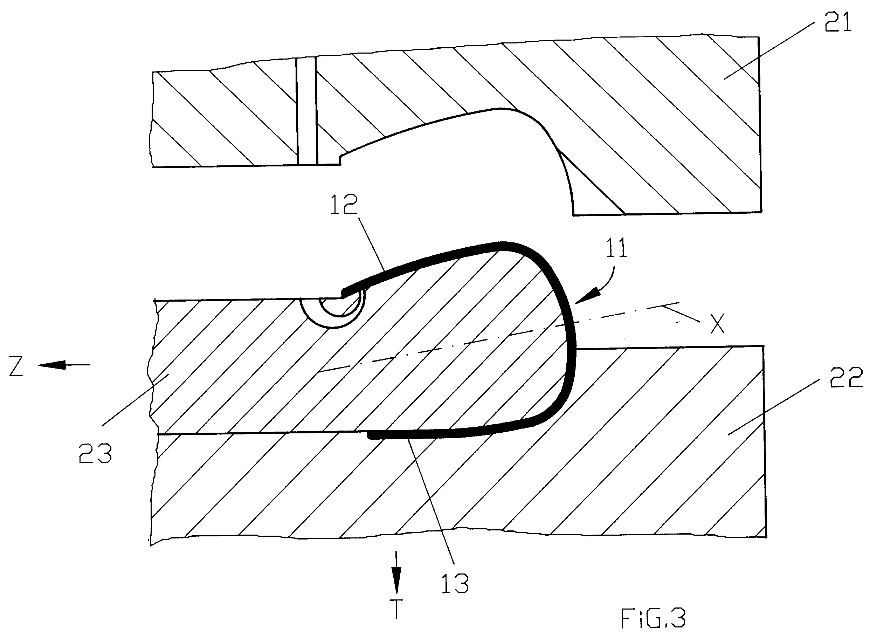

Nachdem die Kunststoffmasse in den Formhohlraum 25 eingespritzt wurde und aufgrund einsetzender Aushärtung eine ausreichende Eigenstabilität besitzt, wird die untere Formhälfte 22 zusammen mit dem Schieber 23 und dem gespritzten Bügelkörper 11 nach unten in Richtung des Pfeils T von der oberen Formhälfte 21 weggefahren bzw. getrennt. Nach dem Trennen der Formhälften 21 und 22 ist ein Schenkel 13 des Bügelkörpers 11 zwischen der unteren Formhälfte 22 und dem Schieber 23 gehalten, während der andere Schenkel 12 freiliegt. Wie insbesondere Fig. 3 zu entnehmen ist, verläuft die Profilmittelachse X des U-Profils des Bügelkörpers 11 geneigt sowohl zur Ziehrichtung Z des Schiebers 23 als auch zur Trennrichtung T der Formhälften 21 und 22, da der zwischen der unteren Formhälfte 22 und dem Schieber 23 gehaltene Schenkel 13 sich im wesentlichen in Ziehrichtung Z des Schiebers und somit senkrecht zur Trennrichtung T erstreckt.

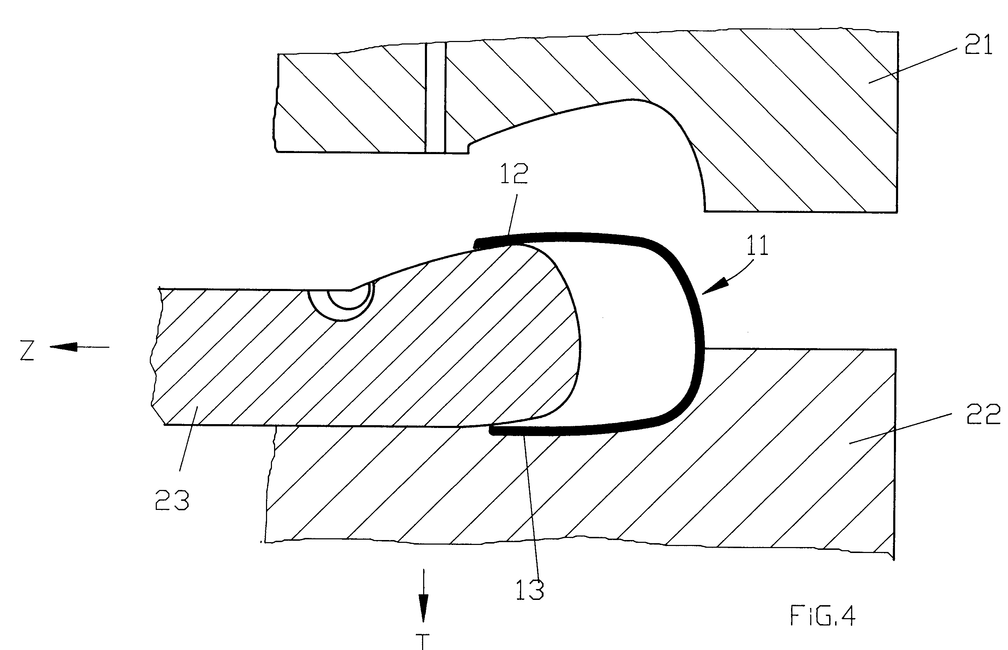

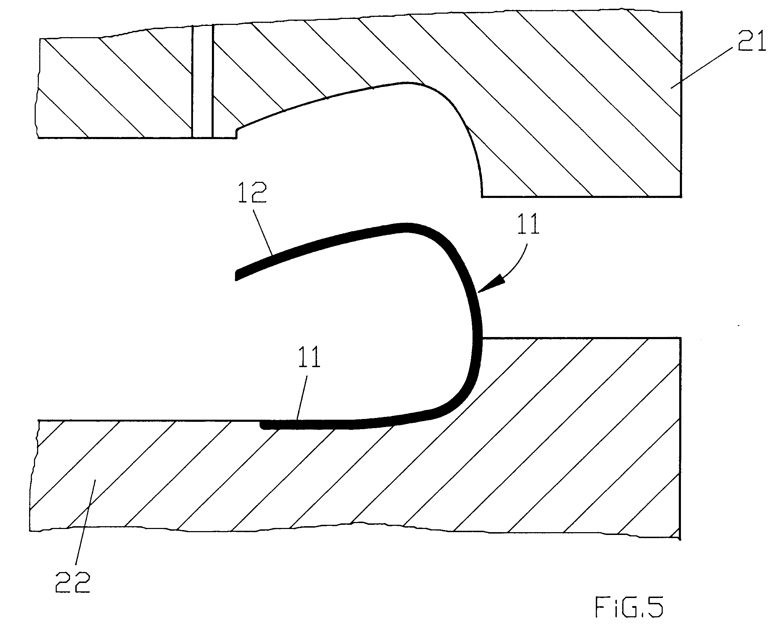

Nach dem Trennen der Formhälften 21 und 22 wird der Schieber in Ziehrichtung Z herausgezogen, wie in Fig. 4 dargestellt ist. Da der Schenkel 13 sich im wesentlichen parallel zur Ziehrichtung Z des Schiebers 23 erstreckt und vollflächig auf der unteren Formhälfte 22 aufliegt, wirken beim Ziehen des Schiebers 23 keine wesentlichen Querkräfte auf ihn ein. Der andere, freiliegende Schenkel 12 des U-Profils wird jedoch beim Herausziehen des Schiebers relativ zum anderen Schenkel 13 gespreizt, bis die beiden Schenkel 12 und 13 im wesentlichen parallel verlaufen und der Schieber 23 herausgezogen werden kann. Nach dem Herausziehen des Schiebers 23 federt der elastisch verformte Schenkel 12 in seine ursprüngliche Position zurück, so daß der Bügelkörper wieder sein hufeisenförmiges U-Profil mit nach innen gezogenen freien Enden der Schenkel besitzt, wie in Fig. 5 gezeigt ist. Anschließend wird der Bügelkörper von der ihn tragenden unteren Formhälfte 22 gelöst, was insbesondere durch entsprechende Ausstoßer erreicht werden kann.

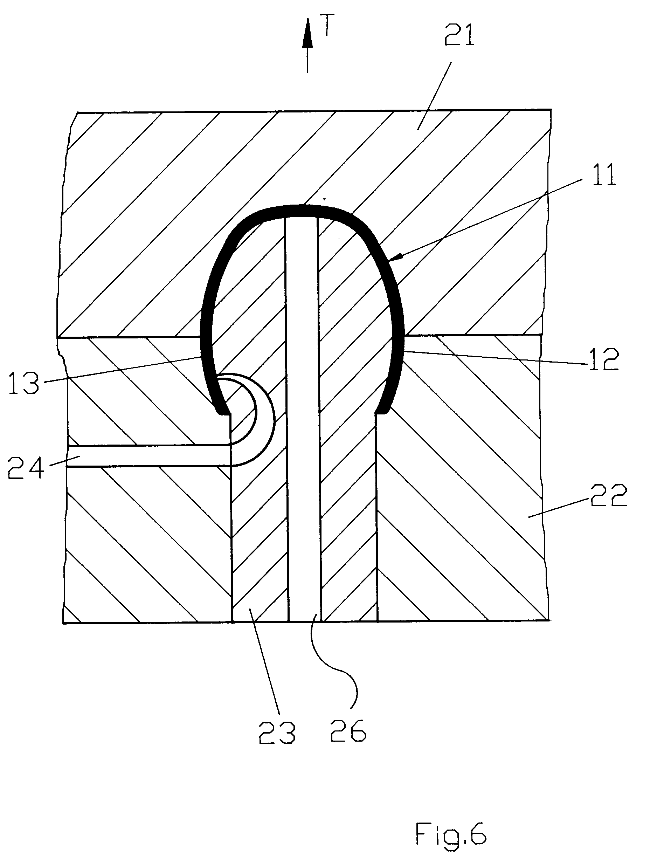

Anhand der Figuren 6 bis 9 wird im folgenden ein 2. Verfahren zur Herstellung eines Kleiderbügels erläutert.

Gemäß der Figur 6 sind eine obere Formhälfte 21 und eine untere Formhälfte 22 vorgesehen, die einen Hohlraum für einen stehenden Bügelkörper außenseitig begrenzen. Innenseitig ist der Hohlraum von einem an der unteren Formhälfte 22 angebrachten Kern 23 begrenzt, der in seiner im wesentlichen vertikal verlaufenden Mittelachse einen Ausstoßer 26 lagert. Die obere Formhälfte 21 ist in Richt des Pfeils V von der unteren Formhälfte 22 bzw. dem Kern 23 abhebbar. Der Formhohlraum kann in oben genannter Weise über einen Zuführkanal 24 mit einer Kunststoffmasse gefüllt werden. In Figur 6 ist der Zustand nach dem Einspritzen der Kunststoffmasse dargestellt, so daß bereits ein Bügelkörper 11 mit einem hufeisenförmigen Profil gebildet ist, das zwei außenseitig konvex geformte, an ihren Enden nach innen gezogene Schenkel 12 und 13 umfaßt.

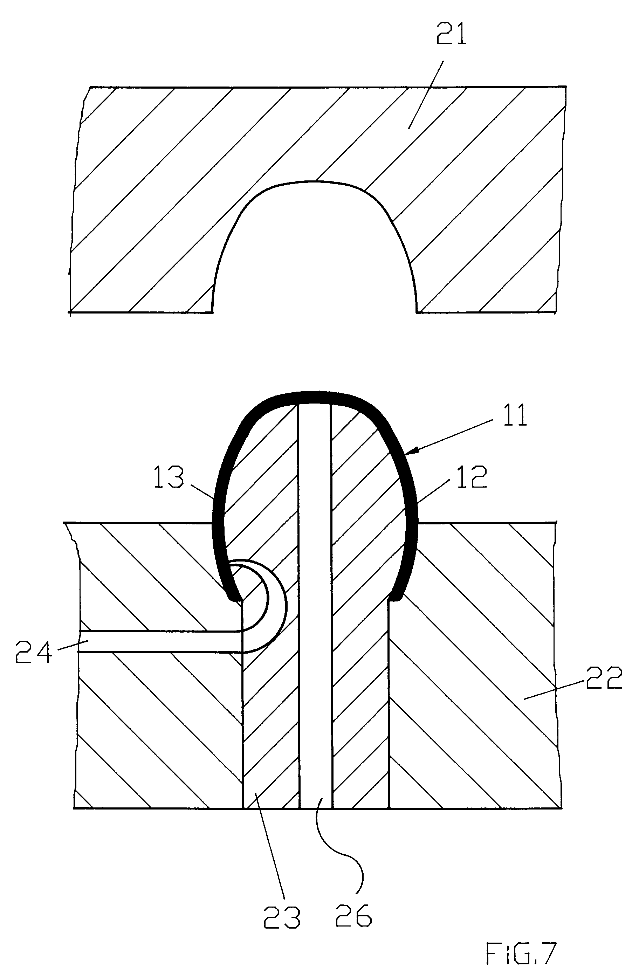

Nachdem die Kunststoffmasse ausreichend verfestigt ist, wird die obere Formhälfte 21 in Richtung des Pfeils V abgehoben, was dadurch möglich ist, daß die Trennebene zwischen den beiden Formhälften 21 und 22 im Bereich der größten Breite des Bügelkörpers 11 liegt. Nach dem Abheben der oberen Formhälfte 21 sind die beiden Schenkel 12 und 13 des Bügelkörpers 11 in ihrem unteren Abschnitt zwischen der unteren Formhälfte 22 und dem Kern 23 gehalten, wie es in Figur 7 dargestellt ist.

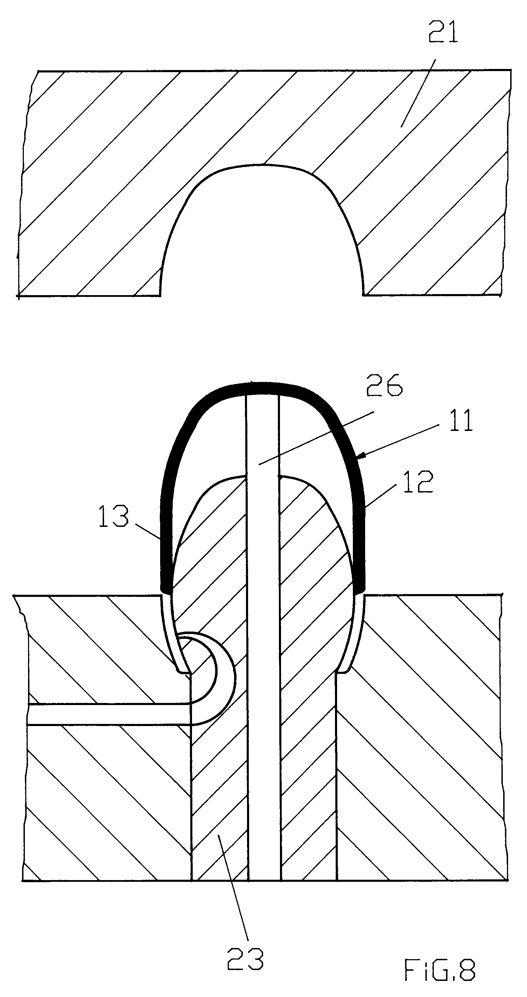

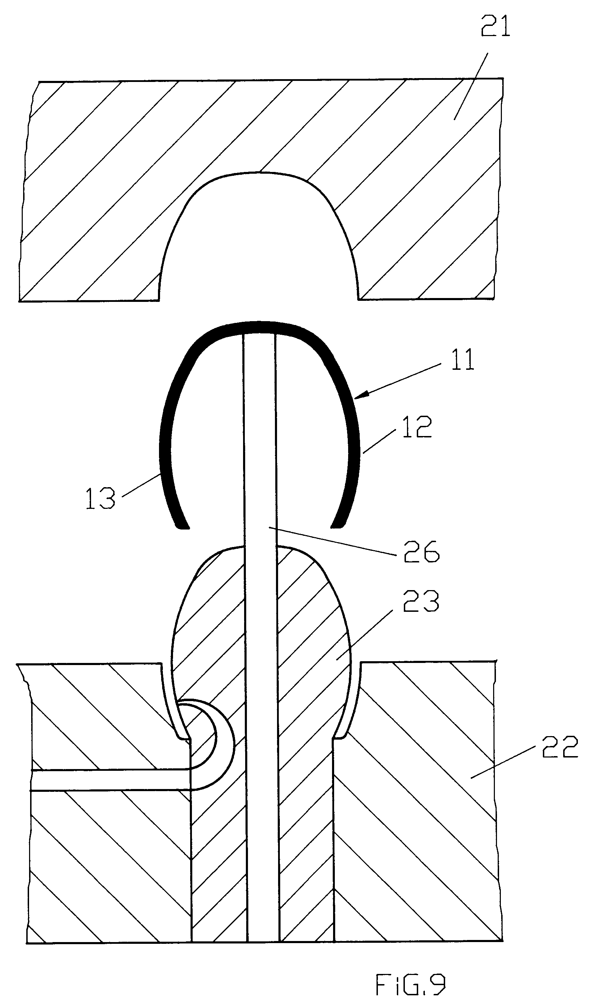

Durch Vorschieben des Ausstoßers 26 wird der Bügelkörper 11 nach oben aus seiner Halterung zwischen der unteren Formhälfte 22 und dem Kern 23 herausgeschoben, wobei die beiden Schenkel 12 und 13 elastisch verformt werden, wie es in Figur 8 gezeigt ist. Nach dem vollständigen Ausstoßen des Bügelkörpers 11 federn die elastisch verformten Schenkel 12 und 13 in ihre ursprüngliche Position zurück, so daß der Bügelkörper wieder sein hufeisenförmiges Profil einnimmt, bei dem die freien Enden der Schenkel nach innen gezogen sind, wie in Figur 9 gezeigt ist. Aus der in Figur 9 gezeigten ausgestoßenen Stellung kann der Bügelkörper in herkömmlicher Weise entnommen und einer weiteren Bearbeitung zugeführt werden.

## Patentansprüche

1. Kleiderbügel mit einem Bügelkörper, der ein nach unten offenes U-Profil besitzt, und einem im Mittelbereich des Bügelkörpers angebrachten Aufhängehaken, dadurch gekennzeichnet, daß die freien Enden (15) der Schenkel (12,13) des U-Profils zur Profilmittelachse X nach innen gezogen sind.

2. Kleiderbügel nach Anspruch 1, dadurch gekennzeichnet, daß die Schenkel (12,13) des U-Profils eine im wesentlichen konstante Dicke aufweisen.

3. Kleiderbügel nach Anspruch 1 oder 2, dadurch gekennzeichnet, daß die Schenkel (12,13) zumindest abschnittsweise im wesentlichen geradlinig sind.

4. Kleiderbügel nach einem der Ansprüche 1 bis 3, dadurch gekennzeichnet, daß die Schenkel (12,13) zumindest abschnittsweise im wesentlichen kontinuierlich gekrümmt sind.

5. Kleiderbügel nach einem der Ansprüche 1 bis 4, dadurch gekennzeichnet, daß die Außenseite des U-Profils kantenfrei ist.

6. Kleiderbügel nach einem der Ansprüche 1 bis 5, dadurch gekennzeichnet, daß der Bügelkörper (11) ein hufeisenförmiges Profil aufweist.

7. Kleiderbügel nach einem der Ansprüche 1 bis 6, dadurch gekennzeichnet, daß der Bügelkörper (11) aus Kunststoff besteht.

8. Verfahren zur Herstellung eines Kleiderbügels insbesondere nach einem der Ansprüche 1 bis 7, wobei ein dem Bügelkörper (11) entsprechender Formhohlraum (25), der außenseitig von zwei Formhälften (21,22) und innenseitig von zumindest einem Kern (23) begrenzt ist, mit einem Kunststoff-Material aufgefüllt wird, woraufhin nach begonnener Aushärtung des Bügelkörpers (11) die Formhälften (21,22) derart voneinander getrennt werden, daß der Bügelkörper (11) in einer Formhälfte (22) verbleibt, und der Bügelkörper (11) anschließend unter elastischer Verformung zumindest eines seiner Schenkel (12) von dem Kern (23) freikommt und von der ihn tragenden Formhälfte (22) gelöst wird.

9. Verfahren nach Anspruch 8, dadurch gekennzeichnet, daß der Bügelkörper (11) liegend gespritzt wird und jede Formhälfte (21,22) jeweils einen Schenkel (12,13) des Bügelkörpers (11) außenseitig begrenzt.

10. Verfahren nach Anspruch 8 oder 9, dadurch gekennzeichnet, daß der Kern ein Schieber (23) ist, der nach dem Trennen der Formhälften (21,22) aus dem Bügelkörper (11) zur offenen Seite des U-Profils zwischen den Schenkeln (12,13) herausgezogen wird.

11. Verfahren nach Anspruch 10, dadurch gekennzeichnet, daß nach dem Trennen der Formhälften (21,22) ein Schenkel (13) des Bügelkörpers (11) zwischen der einen Formhälfte (22) und dein Schieber (23) gehalten ist, während der andere Schenkel (12) freiliegt.

12. Verfahren nach einem der Ansprüche 9 bis 11, dadurch gekennzeichnet, daß die Profilmittelachse X des U-Profils des Bügelkörpers (11) geneigt zur Trennrichtung (T) der Formhälften (21,22) verläuft.

13. Verfahren nach Anspruch 12, dadurch gekennzeichnet, daß der Neigungswinkel der Profilmittelachse X bezüglich einer Senkrechten zur Trennrichtung (T) dem Neigungswinkel der Schenkel (12,13) relativ zur Profilmittelachse X entspricht.

14. Verfahren nach einem der Ansprüche 10 bis 13, dadurch gekennzeichnet, daß die Profilmittelachse X des U-Profils des Bügelkörpers (11) geneigt zur Ziehrichtung (Z) des Schiebers (23) verläuft.

15. Verfahren nach einem der Ansprüche 11 bis 14, dadurch gekennzeichnet, daß der nach dem Trennen der Formhälften (21,22) zwischen der einen Formhälfte (22) und dem Schieber (23) gehaltene Schenkel (13) sich im wesentlichen in Ziehrichtung (Z) des Schiebers (23) erstreckt.

16. Verfahren nach einem der Ansprüche 11 bis 15, dadurch gekennzeichnet, daß der nach dem Trennen der Formhälften (21,22) zwischen der einen Formhälfte (22) und dem Schieber (23) gehaltene Schenkel (13) sich im wesentlichen senkrecht zur Trennrichtung T der Formhälften (21,22) erstreckt.

17. Verfahren nach Anspruch 8, dadurch gekennzeichnet, daß der Bügelkörper (11) stehend gespritzt wird, wobei eine obere Formhälfte (21) jeweils einen oberen Abschnitt der Schenkel (12,13) des Bügelkörpers (11) und den diese verbindenden Steg (17) außenseitig begrenzt, während eine untere Formhälfte (22) jeweils einen unteren Abschnitt der Schenkel (12,13) außenseitig begrenzt.

18. Verfahren nach Anspruch 17, dadurch gekennzeichnet, daß der Kern (23) fest mit der unteren Formhälfte (22) verbunden ist.

19. Verfahren nach Anspruch 17 oder 18, dadurch gekennzeichnet, daß nach dem Trennen der Formhälften (21,22) beide Schenkel (12,13) des Bügelkörpers (11) in ihrem unteren Abschnitt zwischen der unteren Formhälfte (22) und dem Kern (23) gehalten sind.

20. Verfahren nach einem der Ansprüche 17 bis 19, dadurch gekennzeichnet, daß im Kern (23) ein Ausstoßer (26) angeordnet ist, mit dem der Bügelkörper (11) nach Abheben der oberen Formhälfte (21) vom Kern (23) heruntergeschoben sind.
